# EUROPÄISCHE PATENTSCHRIFT

(11) **EP 2 033 760 B1**
(45) Veröffentlichungstag und Bekanntmachung des Hinweises auf die Patenterteilung: **12.01.2011**
(21) Anmeldenummer: 07017635.9
(22) Anmeldetag: 10.09.2007
(51) Int. Cl.: B29C 45/14, B29C 45/16, B29C 44/12, B29C 33/14

(54) **Verfahren und Vorrichtung zur Herstellung von Formteilen mit unterschiedlichen Dekorbereichen**
Method and device for manufacturing moulded parts with different decorative areas
Dispositif et procédé destinés à la fabrication de pièces de moulage dotées de différentes zones de décoration

(43) Veröffentlichungstag der Anmeldung: 11.03.2009
(73) Patentinhaber: PEGUFORM GMBH, 79268 Bötzingen (DE)
(72) Erfinder: Buchet, Yann, 67000 Strasbourg (FR); Hiss, Markus, 79242 Ihringen (DE)
(74) Vertreter: Patentanwälte Westphal, Mussgnug & Partner

(56) Entgegenhaltungen:
- EP-A- 1 655 122
- FR-A- 2 771 045
- US-B1- 6 202 276

## Beschreibung

Die Erfindung betrifft ein Verfahren sowie eine Vorrichtung zur Herstellung von Formteilen mit unterschiedlich ausgeführten Dekorbereichen sowie die Verwendung der Formteile als Innenverkleidung für Kraftfahrzeuge, insbesondere Instrumententafeln, Türverkleidungen oder Seitenverkleidungen.

Es ist bekannt, Gewebematerialien, Kunststofffolien, Teppichmaterialien oder Leder bzw. Lederimitate, die als Dekor dienen oder auch eine spezielle technische Funktion haben, mit formgebendem Kunststoff zu hinterspritzen, indem das Gewebe in eine Form eingelegt wird und flüssiger Kunststoff in die Form eingespritzt wird.

In Fällen, in denen das Formteil mit unterschiedlichen Oberflächenstrukturen versehen sein soll, löst man die Aufgabe dadurch, dass zwei Teile quasi als Halbzeug in unterschiedlichen Herstellprozessen vorgefertigt und anschließend miteinander verbunden bzw. verklebt werden. Das Verarbeiten von mehreren Teilen bringt allerdings das Problem mit sich, dass eine Vielzahl unterschiedlicher Verarbeitungsschritte sowie Transportvorgänge für die entsprechenden Halbzeuge koordiniert werden müssen. Nachteilig ist dabei der zusätzliche Zeitaufwand sowie der fertigungstechnische Aufwand.

In der EP 1 655 122 A1 wird ein Verfahren beschrieben zur Herstellung von Kunststoffteilen gemäß dem Oberbegriff des Anspruchs 1, bei dem in einem ersten Vorgang ein erstes Gewebe oder Dekorfolie in einem Formwerkzeug hinterspritzt wird, anschließend ein Teilstück aus dem so hergestellten Halbzeug ausgestanzt wird und dann ein zweites Gewebe oder Dekorfolie an Stelle des entfernten Teils des Halbzeugs eingelegt wird und das Halbzeug dann zumindest an der Stelle des zweiten Gewebes ebenfalls hinterspritzt wird.

Ein Nachteil dieses Verfahrens ist insbesondere darin zu sehen, dass beim Ausstanzen des zu ersetzenden Bereiches das Formwerkzeug leicht beschädigt werden kann. Da die Formwerkzeuge einen erheblichen Kostenfaktor bei der Herstellung von Formteilen ausmachen, bestand somit das Problem, ein Verfahren zu finden, mit dessen Hilfe es gelingt, zu ersetzende Bereiche eines Formteiles konturgenau abzutrennen, ohne dabei das Werkzeug zu gefährden.

Gelöst wird diese Aufgabe durch ein Verfahren mit den Merkmalen des Anspruchs 1. Bevorzugte Ausführungsformen des erfindungsgemäßen Verfahrens sind in den Unteransprüchen wiedergegeben.

Gegenstand der vorliegenden Erfindung ist auch eine Vorrichtung zur Herstellung von Formteilen mit unterschiedlichen Dekorbereichen gemäß den Merkmalen des Anspruchs 12 sowie die Verwendung der betreffenden Formteile als Fahrzeuginnenverkleidung, insbesondere als Instrumententafel, Seitenverkleidung oder Türverkleidung gemäß den Merkmalen des Anspruchs 13.

Das Erfindungsprinzip basiert darauf, dass der zu ersetzende Bereich des Formteils nicht mehr ausgestanzt wird, sondern die Dekorfolie, die in diesem Bereich nicht hinterformt ist, im Randbereich geschwächt wird, sodass das entsprechende Teilstück der Dekorfolie sauber abgerissen werden kann. Um die zu hinterformenden Bereiche und die freibleibenden Bereiche im Werkzeug voneinander zu trennen, sind im Formwerkzeug schmale Stege vorgesehen, die unterschiedliche Kavitäten ausbilden. Diese Stege haben sowohl formgebende Aufgaben als auch abdichtende Aufgaben.

Beim erfindungsgemäßen Verfahren wird zunächst die gesamte Kavität des Formwerkzeuges mit einer ersten Dekorfolie belegt. Das Formwerkzeug selber ist durch schmale Stege unterteilt, wodurch einzelne Teilkavitäten ausgebildet werden, die mit der ersten Dekorfolie belegt sind. Da die schmalen Stege zugleich eine abdichtende Funktion haben, kann die Dekorfolie in den einzelnen Teilkavitäten nun unterschiedlich nachbehandelt werden. So wird die Dekorfolie im Bereich wenigstens einer durch eine Anordnung schmaler Stege ausgebildeten Kavität im Formwerkzeug hinterformt, während sie in mindestens einem Bereich eines zu entfernenden Teilstücks frei bleibt. Der schmale Steg im Formwerkzeug bildet die Grenze zwischen dem hinterformten Teilbereich des Halbzeugs und dem unbehandelten Bereich des Halbzeugs.

Nach diesem ersten Hinterformen wird das Werkzeug geöffnet und das teilweise hinterformte Halbzeug verbleibt in der Matrize und wird in eine Beschnittposition gebracht. Während der hinterformte Teil des Halbzeuges mit Hilfe eines Haltesystems in der Matrize bzw. an der Werkzeugoberfläche fixiert wird, wird die nicht hinterformte Dekorfolie im Bereich der Kopfseite der schmalen Stege im Randbereich konturnah geschwächt, sodass sie mit Hilfe eines Greifers entfernt werden kann, während das Halbzeug mit Hilfe des Haltesystems in der Kavität fixiert ist. Die Schwächung der Dekorfolie im Bereich der schmalen Stege kann durch mechanisches Schneiden mit Hilfe eines Messers oder mit Hilfe eines CO₂-Laserstrahls erfolgen. Die Schwächung der Dekorfolie erfolgt so, dass die entstehende Nut bis nah an die Oberfläche des Formwerkzeuges ausgebildet ist, sodass das zu entfernende Teilstück mit niedriger Abzugskraft entfernt werden kann.

Das Hinterformen ist vorzugsweise ein Hinterspritzen oder Hinterschäumen, wobei als Trägermaterialien thermoplastische Kunststoffe, wie z. B. Polypropylen (PP), Polyethylen (PE), Polyurethan (PU), Polyamid (PA), Polycarbonat (PC), Acrylnitril-Butadien-Styrol (ABS), Acrylnitril-Butadien-Styrol /Polycarbonat Copolymerisat eingesetzt werden. Dabei können diese Kunststoffe in einer bevorzugten Ausführungsform auch verstärkt sein, wobei als Verstärkungsmaterialien Fasern, wie z.B. Glasfasern, Naturfasern oder Karbonfasern, oder die sonst üblichen Verstärkungsmaterialien eingesetzt werden können. Als Dekorfolien kommen Gewebe, Dekorstoffe, Kunststofffolien, Teppichstoffe, Leder und Lederimitate in Frage. Häufig werden Dekorfolien aus Kunststoff eingesetzt, wobei auch hier wieder bevorzugt thermoplastische Kunststoffe wie Polypropylen (PP), Polyethylen (PE), Polyvinylchlorid (PVC) und Polyurethan (PU) eingesetzt werden.

Die im Formwerkzeug ausgebildeten schmalen Stege besitzen sowohl eine formgebende als auch eine abdichtende Funktion und unterteilen die Kavität des Werkzeuges in unterschiedliche Teilkavitäten, die dem Konzept für das Formteil entsprechend hinterformt werden bzw. frei bleiben. Nachdem die Dekorfolie in den zu hinterformenden Bereichen hinterformt ist, wird das Werkzeug geöffnet, sodass sämtliche Teilkavitäten von außen zugänglich sind. Die hinterformten Bereiche werden im Werkzeug bzw. in der Matrize mit Hilfe eines Haltesystems fixiert, wobei bei einer bevorzugten Ausführungsform das Haltesystem Niederhaltestempel umfasst, deren Stempelkopf mit einer Dichtung versehen ist. Die Dichtung hat die Funktion, den hinterformten Bereich während der Bearbeitung abzudichten und vor einem Eindringen beispielsweise von Schmauchspuren, die sich bei der Ausbildung der Schwächungsnut mit einem CO₂-Laser bilden können, zu schützen.

Nachdem der erste Dekorbereich hinterformt und im Formwerkzeug fixiert ist, wird die nicht hinterformte Dekorfolie in dem Bereich der schmalen Stege, die die Grenze zwischen dem hinterformten Bereich und dem zu entfernenden nicht hinterformten Teilstück der Dekorfolie bilden, geschwächt. Als Schwächungsmittel werden dazu mechanische Schneidemittel, wie z.B. Messer, oder Laser (CO₂-Laser) eingesetzt. Nach der Schwächung kann das Teilstück mittels eines Greifers entfernt werden.

Für die Ausbildung des zweiten Dekorbereiches können an dieser Stelle nun zwei unterschiedliche Wege eingeschlagen werden.

Bei der ersten Variante bleibt dieser Bereich frei und das Dekor wird beim Hinterformen dieses Bereiches direkt auf der Oberfläche des Trägermaterials ausgebildet, wobei die Oberfläche des Formwerkzeugs als negative Dekorvorlage dient und auf der Formteiloberfläche abgebildet wird. Dabei kann die Werkzeugoberfläche Narbungen oder andere dekorative Strukturen aufweisen, die dann auf der Trägeroberfläche wiederzufinden sind.

Bei der zweiten Variante wird nach dem Ausschneiden des Teilbereichs an diese Stelle eine zweite Dekorfolie in das Werkzeug eingelegt, die dann wieder mit einem thermoplastischen Kunststoff hinterformt wird.

Natürlich ist es auch möglich, mehrere Bereiche aus dem Formteilhalbzeug auszuschneiden und dann beide oben genannten Varianten nebeneinander oder auch unterschiedliche Dekorfolien als zweite Dekorfolie einzusetzen, so dass auf dem Formteil mehrere unterschiedliche Dekorbereiche ausgebildet werden.

Die Vorrichtung zur Herstellung eines unterschiedliche Dekorbereiche aufweisenden Formteils umfasst somit ein Formwerkzeug, das schmale Stege zur Ausbildung und Abdichtung unterschiedlicher Teilkavitäten im Formwerkzeug aufweist, ein Haltesystem zum Fixieren des Halbzeuges im geöffneten Formwerkzeug sowie ein Schwächungswerkzeug, das als mechanisches Schneidwerkzeug oder als Laser ausgebildet sein kann und im Bereich der schmalen Stege eingesetzt wird.

Die erfindungsgemäß hergestellten Formteile finden Verwendung insbesondere als Innenverkleidung von Kraftfahrzeugen, wie z. B. Instrumententafeln, Türverkleidungen oder Seitenverkleidungen.

Im Folgenden wird die Erfindung anhand von Zeichnungen näher erläutert. Dabei zeigen
- Fig. 1: einen Querschnitt durch ein geöffnetes Formwerkzeug mit eingelegtem Formteilhalbzeug während der Bearbei- tung mit dem Schwächungswerkzeug und
- Fig. 2: einen Querschnitt durch das Formwerkzeug aus Fig. 1 nach der Behandlung des Formteilhalbzeuges mit einem Schwächungswerkzeug sowie
- Fig. 2a: einen Ausschnitt aus Fig. 2.

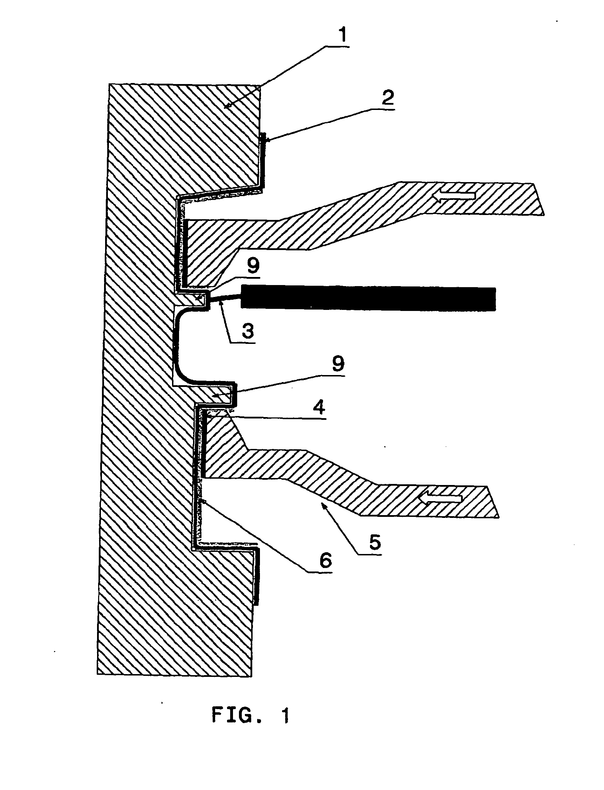

In der Fig. 1 ist ein Schnitt durch ein Formwerkzeug 1 zu sehen, dessen Kavität durch schmale Stege 9 unterteilt ist. Die Dekorfolie 2 belegt die gesamte Kavität des Formwerkzeuges und ist in Teilbereichen mit einem Träger 6 hinterformt. In das so gebildete Formteilhalbzeug greift nach dem Öffnen des Formwerkzeugs das Schwächungswerkzeug 3 zur Schwächung der Dekorfolie 2 im Bereich der schmalen Stege 9 ein. Die Schwächung selber erfolgt auf der Kopfseite der schmalen Stege 9. Die Dekorfolie 2 zeigt dabei eine gewisse Elastizität und liegt in dem zu entfernenden Teilbereich aufgrund von Schrumpfung nicht mehr an der Werkzeugoberfläche an, wodurch das Ablösen der Dekorfolie in diesem Bereich zusätzlich erleichtert wird. Das Haltesystem wird von zwei Niederhaltestempeln 5 gebildet, deren Stempelkopf mit einer Dichtung 4 versehen ist.

Nach dem Entfernen des hinterformten Teils der ersten Dekorfolie 2 kann eine zweite Dekorfolie in das Werkzeug 1 eingelegt und mit flüssigem Thermoplast hinterformt werden. Es kann jedoch auch die Formwerkzeugoberfläche bereits mit einer dekorativen Struktur versehen sein, die direkt auf dem Trägermaterial abgebildet werden kann, so dass ein weiteres Dekor auf der Formteiloberfläche erhalten wird, ohne dass eine zusätzliche weitere Dekorfolie eingesetzt werden muss.

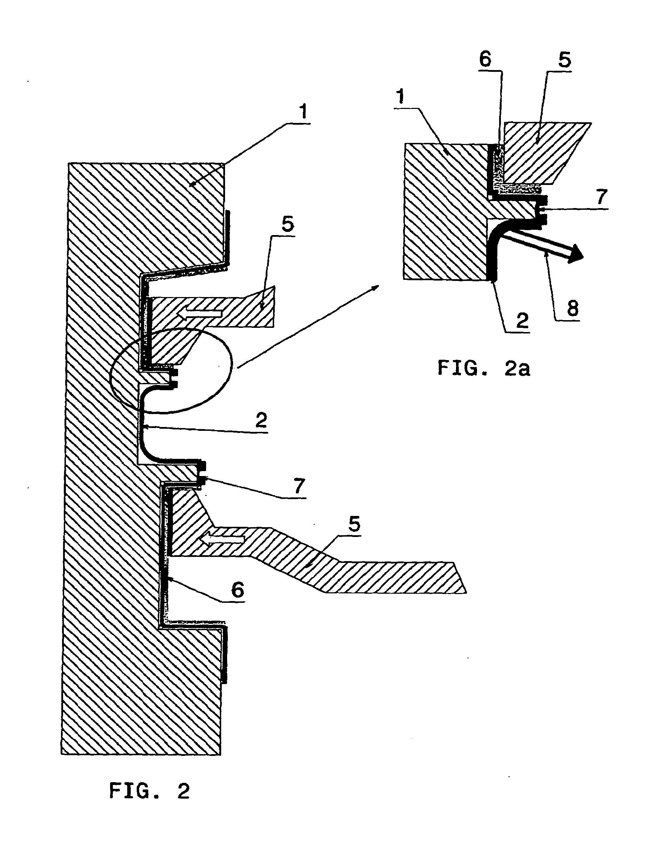

Die Fig. 2 zeigt den auf Fig. 1 folgenden Bearbeitungszustand, wobei die Folie 2 im Bereich der schmalen Stege 9 geschwächt ist und entsprechende Schwächungsnuten 7 aufweist.

In der Figur 2a, die einen Ausschnitt aus Fig. 2 darstellt, ist die Ablöserichtung des nicht hinterformten Teilstückes der ersten Dekorfolie 2 mit dem Richtungspfeil 8 wiedergegeben.

### Bezugszeichenliste

- 1: Formwerkzeug
- 2: Dekorfolie
- 3: Schwächungswerkzeug
- 4: Dichtung
- 5: Niederhaltestempel
- 6: Trägermaterial
- 7: Schwächungsnut
- 8: Richtungspfeil
- 9: Steg

## Patentansprüche

1. Verfahren zur Herstellung eines Formteils mit unterschiedlichen Dekorbereichen, umfassend die Schritte
a) Einlegen einer Dekorfolie (2) in ein Formwerkzeug (1),
b) Hinterformen eines ersten Dekorbereiches mit einem Träger (6) aus thermoplastischem Kunststoff,
c) Entfernen mindestens eines Teilstücks aus dem so hergestellten Halbzeug,
d) Ausbilden eines zweiten Dekorbereiches an der Stelle des entfernten Teilstücks,
**dadurch gekennzeichnet, dass**
i) die Dekorfolie (2) im Bereich wenigstens einer durch eine Anordnung schmaler Stege (9) ausgebildeter Teilkavität im Formwerkzeug (1) hinterformt wird und im Bereich des mindestens einen zu entfernenden Teilstücks frei bleibt,
ii) das hinterformte Teilstück des Formteils mit Hilfe eines Haltesystems (5) im Werkzeug (1) fixiert wird,
iii) die Dekorfolie (2) im Bereich der schmalen Stege (9), die die Grenze zwischen dem hinterformten Bereich und dem zu entfernenden nicht hinterformten Teilstück der Dekorfolie (2) bilden, geschwächt wird,
iv) das nicht hinterformte Teilstück mit Hilfe eines Greifers entfernt wird und
v) der Bereich des Formteils an der Stelle des entfernten Teilstücks als zweiter Dekorbereich ausgebildet und hinterformt wird.

2. Verfahren nach Anspruch 1,
**dadurch gekennzeichnet, dass**
der zweite Dekorbereich durch direkte Abbildung eines Dekors auf der Oberfläche des Trägers (6) durch das Formwerkzeug (1) ausgebildet wird.

3. Verfahren nach Anspruch 1,
**dadurch gekennzeichnet, dass**
nach Entfernen des Teilstücks an dessen Stelle eine zweite Dekorfolie eingelegt und anschließend hinterformt wird.

4. Verfahren nach einem der Ansprüche 1 bis 3,
**dadurch gekennzeichnet, dass**
das Hinterformen durch Hinterspritzen oder Hinterschäumen erfolgt.

5. Verfahren nach einem der Ansprüche 1 bis 4,
**dadurch gekennzeichnet, dass**
als Dekorfolie Gewebe, Dekorstoffe, Kunststofffolien, Teppichstoffe, Leder und Lederimitate eingesetzt werden.

6. Verfahren nach einem der Ansprüche 1 bis 5,
**dadurch gekennzeichnet, dass**
als thermoplastischer Kunststoff Polypropylen (PP), Polyethylen (PE), Polyurethan (PU), Polyamid (PA), Polycarbonat (PC), Acrylnitril-Butadien-Styrol (ABS) und Acrylnitril-Butadien-Styrol / Polycarbonat Copolymerisat (ABS-PC) eingesetzt wird.

7. Verfahren nach Anspruch 6,
**dadurch gekennzeichnet, dass**
der thermoplastischen Kunststoff mit Fasern, wie z. B. Glasfasern, Naturfasern oder Karbonfasern, verstärkt ist.

8. Verfahren nach einem der Ansprüche 1 bis 7,
**dadurch gekennzeichnet, dass**
die schmalen Stege (9) sowohl eine formgebende als auch eine abdichtende Funktion besitzen.

9. Verfahren nach einem der Ansprüche 1 bis 8,
**dadurch gekennzeichnet, dass**
die Schwächung der Dekorfolie (2) durch ein mechanisches Schneiden erfolgt.

10. Verfahren nach einem der Ansprüche 1 bis 8,
**dadurch gekennzeichnet, dass**
die Schwächung der Dekorfolie (2) mit Hilfe eines LaserStrahls erfolgt.

11. Verfahren nach einem der Ansprüche 1 bis 10,
**dadurch gekennzeichnet, dass**
das Haltesystem Niederhaltestempel umfasst, deren Stempelkopf mit einer Dichtung ausgerüstet ist.

12. Vorrichtung zur Herstellung eines unterschiedliche Dekorbereiche aufweisenden Formteils mit
a) einem Formwerkzeug (1),
b) einem Haltesystem (5) und
c) einem Schwächungswerkzeug (3),
**dadurch gekennzeichnet, dass**
i) das Formwerkzeug (1) schmale Stege (9) zur Ausbildung und Abdichtung unterschiedlicher Teilkavitäten im Formwerkzeug (1) aufweist,
ii) das Haltesystem (5) Niederhaltestempel umfasst, die in das Formwerkzeug (1) eingreifen und hinterformte Bereiche des Formteils an der Werkzeugoberfläche fixieren, und
iii) das Schwächungswerkzeug (3) im Bereich der schmalen Stege (9) einsetzbar ist und ausgewählt ist aus der Gruppe umfassend mechanische Schneidemittel oder Laser.

13. Verwendung von Formteilen hergestellt nach einem der vorgenannten Verfahren als Innenverkleidung von Kraftfahrzeugen, insbesondere Instrumententafel, Türverkleidung oder Seitenverkleidung.

## Claims

1. A method for producing a moulded part having different decorative areas, comprising the following steps:
a) inserting a decorative film (2) into a moulding tool (1),
b) back-moulding a first decorative area with a carrier (6) made from a thermoplastic material,
c) removing at least a section of the semi-finished product produced in this way,
d) forming a second decorative area at the location of the removed section,
**characterised in that**
i) the decorative film (2) is back-moulded in the area of at least one recess in the moulding tool (1), which recess is formed by an arrangement of narrow webs (9), and remains free in the area of the at least one section to be removed,
ii) the back-moulded section of the moulded part is fixed by means of a holding system (5) in the tool (1),
iii) the decorative film (2) is weakened in the area of the narrow webs (9) which form the boundary between the back-moulded area and the not back-moulded section of the decorative film (2), which is to be removed,
iv) the not back-moulded section is removed by means of a gripper, and
v) the area of the moulded part is formed and back-moulded at the location of the removed section as a second decorative area.

2. The process as claimed in Claim 1, **characterised in that** the second decorative area is formed by means of direct imaging of a decor onto the surface of the carrier (6) by means of the moulding tool (1).

3. The method as claimed in Claim 1, **characterised in that** upon removing the section, a second decorative film is inserted instead of said section and is subsequently back-moulded.

4. The method as claimed in any one of Claims 1 to 3, **characterised in that** the back-moulding is carried out by means of back-injecting or back-foaming.

5. The method as claimed in any one of Claims 1 to 4, **characterised in that** as a decorative film, a textile, decorative fabric, decorative films, carpet fabrics, leather and imitation leathers are used.

6. The method as claimed in any one of Claims 1 to 5, **characterised in that** as a thermoplastic material, polypropylene (PP), polyethylene (PE), polyurethane (PU), polyamide (PA), polycarbonate (PC), acrylonitrile butadiene styrene (ABS) and acrylonitrile butadiene styrene /polycarbonate copolymerisate (ABS-PC) is used.

7. The method as claimed in Claim 6, **characterised in that** the thermoplastic material is reinforced with fibres such as for example glass fibres, natural fibres or carbon fibres.

8. The method as claimed in any one of Claims 1 to 7, **characterised in that** the narrow webs (9) have both a shaping and a sealing function.

9. The method as claimed in any one of Claims 1 to 8, **characterised in that** the weakening of the decorative film (2) is carried out by means of mechanical cutting.

10. The method as claimed in any one of Claims 1 to 8, **characterised in that** the weakening of the decorative film (2) is carried out by means of a laser beam.

11. The method as claimed in any one of Claims 1 to 10, **characterised in that** the holding system comprises hold-down stamps, the stamping head of which is provided with a seal.

12. An apparatus for producing a moulded part having different decorative areas, comprising:
a) a moulding tool (1),
b) a holding system (5) and
c) a weakening tool (3),
**characterised in that**
(i) the moulding tool (1) includes narrow webs (9) for forming and sealing different recesses in the moulding tool (1),
ii) the holding system (5) comprises hold-down stamps which engage in the moulding tool (1) and fix back-moulded areas of the moulded part onto the tool surface, and
iii) the weakening tool (3) may be inserted in the area of the narrow webs (9) and is selected from the group comprising mechanical cutting means or lasers.

13. The use of moulded parts produced as claimed in any one of the above-mentioned methods as an inner lining for motor vehicles, in particular an instrument panel, a door panel or a side panel.

## Revendications

1. Procédé de fabrication d'une pièce de moulage ayant différentes zones de décoration comprenant les étapes suivantes :
a) mise en place d'un film de décoration (2) dans un outil de moulage (1),
b) moulage par l'arrière d'une première zone de décoration avec un support (6) en matière thermoplastique,
c) enlèvement d'au moins une partie du produit semi-fini ainsi fabriqué,
d) réalisation d'une seconde zone de décoration à l'endroit de la partie enlevée,
procédé **caractérisé en ce qu'**
i) on forme par l'arrière le film de décoration (2) dans la zone d'au moins une cavité partielle de l'outil de moulage (1) définie par une disposition de nervures étroites (9) et on laisse dégagée au moins une partie à enlever dans la zone,
ii) on fixe dans l'outil (1) la partie moulée par l'arrière de la pièce de moulage à l'aide d'un système de fixation (5),
iii) on affaiblit le film de décoration (2) dans la zone des nervures étroites (9) formant la limite entre la zone moulée par l'arrière et la partie du film de décoration (2) non moulée par l'arrière et qui doit être enlevée,
iv) on enlève la partie non moulée par l'arrière à l'aide d'une pince, et
v) on réalise la zone de la partie moulée à l'endroit de la partie enlevée comme seconde zone de décoration et on la moule par l'arrière.

2. Procédé selon la revendication 1,
**caractérisé en ce que**
la seconde zone de décoration est réalisée par la copie directe d'une décoration sur la surface du support (6) par l'outil de moulage (1).

3. Procédé selon la revendication 1,
**caractérisé en ce qu'**
après enlèvement de la partie, on place un second film de décoration à cet endroit et ensuite on moule par l'arrière.

4. Procédé selon l'une des revendications 1 à 3,
**caractérisé en ce qu'**
on effectue le moulage par l'arrière par injection ou expansion par l'arrière.

5. Procédé selon l'une des revendications 1 à 4,
**caractérisé en ce que**
le film de décoration est un tissu, un tissu décoratif, un film de matière plastique, un tapis, du cuir ou du similicuir.

6. Procédé selon l'une des revendications 1 à 5,
**caractérisé en ce que**
la matière thermoplastique est du polypropylène (PP), du polyéthylène (PE), du polyuréthane (PU), du polyamide (PA), du polycarbonate (PC), de l'acrylnitrile-butadiène-styrène (ABS), et un copolymérisat acrylnitrile-butadiène-styrène/polycarbonate (ABS-PC).

7. Procédé selon la revendication 6,
**caractérisé en ce qu'**
on renforce la matière thermoplastique avec des fibres, telles que des fibres de verre, des fibres naturelles ou des fibres de carbone.

8. Procédé selon l'une des revendications 1 à 7,
**caractérisé en ce que**
les nervures étroites (9) ont à la fois une fonction de moulage et une fonction d'étanchéité.

9. Procédé selon l'une des revendications 1 à 8,
**caractérisé en ce qu'**
on affaiblit le film de décoration (2) par une découpe mécanique.

10. Procédé selon l'une des revendications 1 à 8,
**caractérisé en ce qu'**
on affaiblit le film de décoration (2) à l'aide d'un faisceau laser.

11. Procédé selon l'une des revendications 1 à 10,
**caractérisé en ce que**
le système de fixation comporte un serre-flan dont la tête est équipée d'un joint.

12. Dispositif de fabrication d'une pièce de moulage ayant différentes zones de décoration comportant :
a) un outil de formage (1),
b) un système de fixation (5), et
c) un outil de réduction (3),
dispositif **caractérisé en ce que**
i) l'outil de formage (1) comporte des nervures étroites (9) pour réaliser et séparer de manière étanche des parties de cavité différentes dans l'outil de moulage (1),
ii) le système de fixation (5) comporte des serre-flans qui pénètrent dans l'outil de moulage (1) et fixent les zones de la pièce de moulage contre la surface de l'outil, et
iii) l'outil de réduction (3) s'utilise dans la zone des nervures étroites (9) et il est choisi dans le groupe comprenant des moyens de découpe mécanique ou des lasers.

13. Utilisation de pièces de moulage fabriquées selon l'un des procédés ci-dessus comme habillage intérieur de véhicules automobiles, notamment de tableau de bord, d'habillage de porte ou d'habillage latéral.
